# EUROPEAN PATENT APPLICATION

(11) **EP 4 681 818 A1**
(43) Date of publication of application: **21.01.2026**
(21) Application number: 24774456.8
(22) Date of filing: 31.01.2024
(51) Int. Cl.: B01J 35/57, B01D 53/94, B01J 27/232, F01N 3/08, F01N 3/10, F01N 3/28

(54) **EXHAUST GAS PURIFYING CATALYST**

(30) Priority: 17.03.2023 JP 2023042840
(71) Applicant: Cataler Corporation, Shizuoka 437-1492 (JP)
(72) Inventor: TAKASU, Ryosuke, Kakegawa-shi, Shizuoka 437-1492 (JP); ONOE, Ryota, Kakegawa-shi, Shizuoka 437-1492 (JP); OHASHI, Tatsuya, Kakegawa-shi, Shizuoka 437-1492 (JP); ITO, Masaya, Kakegawa-shi, Shizuoka 437-1492 (JP); ONOHARA, Yu, Kakegawa-shi, Shizuoka 437-1492 (JP)
(74) Representative: Kramer Barske Schmidtchen Patentanwälte PartG mbB
(86) International application number: PCT/JP2024/003052
(87) International publication number: WO 2024/195310

(57) **Abstract**

An exhaust gas purifying catalyst with excellent NOx storing performance is provided. The exhaust gas purifying catalyst disclosed herein includes a base material 10 and a catalyst layer 20. The catalyst layer 20 includes a first layer 21 containing Pd, a second layer 22 containing a catalyst metal and a NOx storing material, and a third layer 23 containing Rh. The second layer 22 includes a second layer upstream side part 22a containing Pt and Pd and a second layer downstream side part 22b containing Pt. When the ratio of the Pd content to the content of the catalyst metal in the second layer upstream side part 22a is a Pd content ratio A and the ratio of the Pd content to the content of the catalyst metal in the second layer downstream side part 22b is a Pd content ratio B, the Pd content ratio A is less than 0.5 and the Pd content ratio A is higher than the Pd content ratio B.

## Description

### Technical Field

The art disclosed herein relates to an exhaust gas purifying catalyst.

The present application claims priority based on Japanese Patent Application No. 2023-042840 filed on March 17, 2023, the entire contents of which application are incorporated herein by reference.

### Background Art

The exhaust gas emitted from an internal-combustion engine such as a vehicle engine includes toxic substances such as hydrocarbon (HC), carbon monoxide (CO), and nitrogen oxide (NOx). In order to remove these toxic substances, conventionally, an exhaust gas purifying catalyst including a base material and a catalyst layer containing a catalyst metal has been used. The exhaust gas supplied to the exhaust gas purifying catalyst comes into contact with the catalyst layer, where the toxic substances are purified. For example, HC and CO in the exhaust gas are oxidized and converted (purified) into water (H₂O) or carbon dioxide (CO₂), and NOx in the exhaust gas is reduced and converted (purified) into nitrogen (N₂).

When the internal-combustion engine is started, the exhaust gas purifying catalyst is not warmed yet sufficiently and the activity of the catalyst metal is low. Therefore, there is a risk that the exhaust gas with the toxic substance remaining therein is emitted until the catalyst metal has a predetermined activation temperature. Thus, in one method to reduce CO and HC, the air-fuel ratio (A/F) of a mixed gas to be supplied at the start of the internal-combustion engine is reduced to make the control of the internal-combustion engine a lean state (oxygen is excessive), which is so-called lean start control. However, in the lean atmosphere, it is difficult to extract oxygen from NOx and NOx cannot be purified, which is a problem. In view of this, in order to suppress the emission of NOx in a warming process at the lean start control, a NOx storage-reduction (NSR) catalyst containing a NOx storing material has been widely used (see Patent Literatures 1 to 3).

Patent Literature 1 discloses an exhaust gas purifying catalyst including three layers, in which a lower layer contains Pt and/or Pd and an oxygen storing material, a middle layer contains Pt and/or Pd and a NOx storing material, and a surface layer contains Rh. Patent Literature 2 discloses an exhaust gas purifying catalyst including Pd, one kind of Pt and Rh, and a NOx storing material, in which Pd is carried on an upstream side. Patent Literature 3 discloses an exhaust gas purifying catalyst including a catalyst layer including a metal layer containing Pt and Pd, and a fire-proof inorganic oxide and a NOx storing material, in which the ratio (Pt/Pd) of the carrying amount of Pt to the carrying amount of Pd is 0.7 or more and less than 1.

### Citation List

### Patent Literatures

Patent Literature 1: Japanese Patent Application Publication No. 2018-143935
Patent Literature 2: Japanese Patent Application Publication No. 2009-000624
Patent Literature 3: Japanese Patent Application Publication No. 2010-104898

### Summary of Invention

The NOx storing material is a component with functions of temporarily storing NOx as a nitrate when the air-fuel ratio of the mixed gas is in an oxygen-excess (lean) state, and releasing the stored NOx when the air-fuel ratio is changed to a stoichiometric to rich state. NOx in the exhaust gas is mostly nitrogen monoxide (NO), and in order for the NOx storing material to suitably store NOx as a nitrate, it is necessary to generate NO₂ that results from oxidation of such NO. The results of the present inventors' examination indicate that Pt has high NO oxidizing performance in the lean atmosphere but has low heat resistance. Under an environment where the temperature is high and the atmosphere varies, the catalyst performance tends to decrease due to sintering of Pt. This leads to a problem that the NOx storing performance decreases.

The present invention has been made in view of the above problem, and an object thereof is to provide an exhaust gas purifying catalyst with excellent NOx storing performance.

In order to achieve the above object, the art disclosed herein provides an exhaust gas purifying catalyst with the following structure.

An exhaust gas purifying catalyst (1) disclosed herein is an exhaust gas purifying catalyst that purifies exhaust gas emitted from an internal-combustion engine, and includes a base material and a catalyst layer disposed on the base material. The catalyst layer includes a first layer disposed on the base material and containing at least Pd as a catalyst metal, a second layer disposed on the first layer and containing a catalyst metal and a NOx storing material, and a third layer disposed on the second layer and containing at least Rh as a catalyst metal. The second layer includes an upstream side part disposed from an upstream side end part of the base material to a downstream side in a flowing direction of the exhaust gas and containing at least Pt and Pd as the catalyst metal, and a downstream side part disposed from a downstream side end part of the base material to an upstream side in the flowing direction of the exhaust gas and containing at least Pt as the catalyst metal. Here, when a ratio of a Pd content to a content of the catalyst metal in the upstream side part is a Pd content ratio A and a ratio of the Pd content to the content of the catalyst metal in the downstream side part is a Pd content ratio B, the Pd content ratio A is less than 0.5 and the Pd content ratio A is higher than the Pd content ratio B.

In an upstream side region of the exhaust gas purifying catalyst, the exhaust gas with high temperature tends to enter; thus, deterioration of Pt occurs easily (for example, purifying performance decreases easily). In view of this, the second layer upstream side part contains the NOx storing material and Pd and Pt as the catalyst metal, so that the heat resistance of Pt can be improved. In addition, in a downstream side region of the exhaust gas purifying catalyst, it is relatively difficult for the exhaust gas with high temperature to enter; thus, the deterioration of Pt does not progress easily. Therefore, the second layer downstream side part can have the larger NOx storing amount by containing more Pt with the high NO oxidizing performance. With such a structure, the NO oxidizing performance of Pt can be suitably exhibited even after the long use and the exhaust gas purifying catalyst with the excellent NOx storing performance can be achieved.

An exhaust gas purifying catalyst (2) disclosed herein is the exhaust gas purifying catalyst (1), in which a ratio of a Pt content in the second layer to the Pd content in the second layer is 3 or more. With such a structure, containing Pt improves the heat resistance of Pt suitably and exhibits the NO oxidizing performance of Pt more effectively; therefore, the exhaust gas purifying catalyst with the excellent NOx storing performance can be provided.

An exhaust gas purifying catalyst (3) disclosed herein is the exhaust gas purifying catalyst (1) or (2), in which the downstream side end part contains Pd as the catalyst metal and the Pd content ratio B is less than 0.3. With such a structure, the NOx storing amount can be increased more suitably in the second layer downstream side part.

An exhaust gas purifying catalyst (4) disclosed herein is any one of the exhaust gas purifying catalysts (1) to (3), in which when a ratio of a Pt content to the content of the catalyst metal in the upstream side part is a Pt content ratio C, the Pt content ratio C is 0.7 or more. With such a structure, the suitable NOx storing performance can be exhibited.

An exhaust gas purifying catalyst (5) disclosed herein is any one of the exhaust gas purifying catalysts (1) to (4), in which when a ratio of a Pt content to the content of the catalyst metal in the downstream side part is a Pt content ratio D, the Pt content ratio D is 0.8 or more. With such a structure, the suitable NOx storing performance can be exhibited.

An exhaust gas purifying catalyst (6) disclosed herein is any one of the exhaust gas purifying catalysts (1) to (5), in which a ratio (A/B) of the Pd content ratio A to the Pd content ratio B is 2 or more. With such a structure, the heat resistance of Pt can be suitably improved particularly in the upstream side part where the exhaust gas with the high temperature tends to enter. Thus, the exhaust gas purifying catalyst with the excellent NOx storing performance can be provided.

An exhaust gas purifying catalyst (7) disclosed herein is any one of the exhaust gas purifying catalysts (1) to (6), in which a coating amount (g/L) of the downstream side part to a coating amount (g/L) of the upstream side part is 0.9 or more and 1.1 or less. With such a structure, the suitable NOx storing performance can be exhibited.

An exhaust gas purifying catalyst (8) disclosed herein is any one of the exhaust gas purifying catalysts (1) to (7), in which the NOx storing material contains an alkaline-earth metal. An exhaust gas purifying catalyst (9) disclosed herein is the exhaust gas purifying catalyst (8), in which the NOx storing material contains barium. With such a structure, the NOx storing material can store NOx as a nitrate more suitably.

An exhaust gas purifying catalyst (10) disclosed herein is any one of the exhaust gas purifying catalysts (1) to (9), in which the third layer contains Rh and Pd as the catalyst metal. With such a structure, CO and HC can be purified more suitably; therefore, the oxidation reaction of NO is not interrupted easily. Thus, the NOx storing performance is improved further.

An exhaust gas purifying catalyst (11) disclosed herein is any one of the exhaust gas purifying catalysts (1) to (10), in which a total Pt content in the second layer is 3.5 g/L or more and 5 g/L or less. An exhaust gas purifying catalyst (12) disclosed herein is any one of the exhaust gas purifying catalysts (1) to (11), in which a total Pd content in the second layer is 0.5 g/L or more and 1.25 g/L or less. With such a structure, the effect of improving the heat resistance of Pt by Pd and the NO oxidizing performance of Pt can be suitably exhibited. Thus, the exhaust gas purifying catalyst with the excellent NOx storing performance can be provided.

An exhaust gas purifying catalyst (13) disclosed herein is any one of the exhaust gas purifying catalysts (1) to (12), in which when a length of the base material in a cylinder axis direction is 100%, a length of the upstream side part in the cylinder axis direction is 30% or more and 70% or less. An exhaust gas purifying catalyst (14) disclosed herein is any one of the exhaust gas purifying catalysts (1) to (13), in which when a length of the base material in a cylinder axis direction is 100%, a length of the downstream side part in the cylinder axis direction is 30% or more and 70% or less. With such a structure, the suitable NOx storing performance can be exhibited.

### Brief Description of Drawings

[Fig. 1] Fig. 1 is a view schematically illustrating a structure of an exhaust gas purifying system according to one embodiment.
[Fig. 2] Fig. 2 is a perspective view schematically illustrating an exhaust gas purifying catalyst according to one embodiment.
[Fig. 3] Fig. 3 is a view schematically illustrating a cross section of the exhaust gas purifying catalyst according to one embodiment taken along a cylinder axis direction.
[Fig. 4] Fig. 4 is a view schematically illustrating a structure of the exhaust gas purifying catalyst according to one embodiment.

### Description of Embodiments

Preferred embodiments of the present invention will be described below with reference to the drawings. Incidentally, matters other than matters particularly mentioned in the present specification and necessary for the implementation of the present invention can be grasped as design matters of those skilled in the art based on the prior art in the relevant field. The present invention can be carried out based on the contents disclosed in this specification and technical common sense in the field. In the drawings below, the members and parts with the same operation are denoted with the same reference symbols and the overlapping description may be omitted or simplified. The size relation (length, width, thickness, and the like) in each drawing does not always reflect the actual size relation. In the present specification, the notation "A to B" (A and B are arbitrary numerals) for a range means a value more than or equal to A and less than or equal to B.

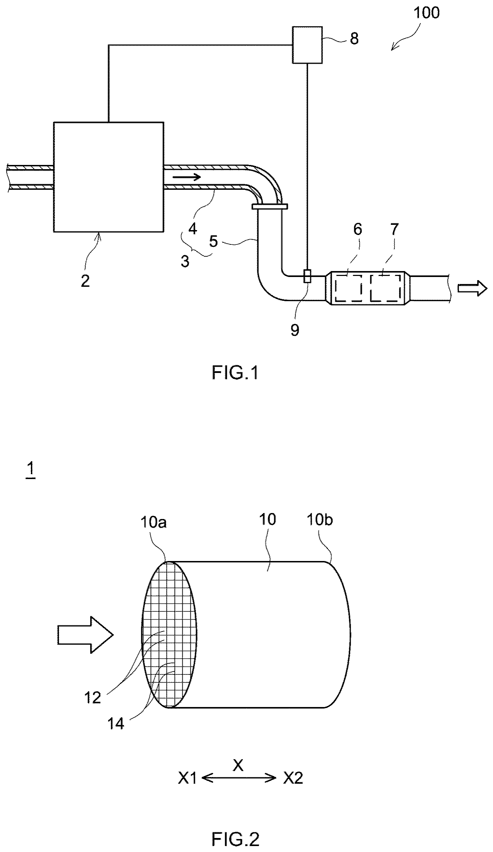

Fig. 1 is a schematic view illustrating an exhaust gas purifying system 100 according to one embodiment. The exhaust gas purifying system 100 purifies a toxic substance in the exhaust gas emitted from an internal-combustion engine 2, such as HC, CO, or NOx. This exhaust gas purifying system 100 includes the internal-combustion engine 2 and an exhaust path 3. The exhaust gas purifying system 100 according to this embodiment includes the internal-combustion engine 2, the exhaust path 3, an engine control unit (ECU) 8, and a sensor 9. An exhaust gas purifying catalyst in the present art is provided in the exhaust path 3 of the internal-combustion engine 2 as one constituent element of this exhaust gas purifying system 100. The exhaust gas flows inside the exhaust path 3. Note that an arrow in the drawing indicates a flowing direction of the exhaust gas. In this specification, along the flow of the exhaust gas, the side closer to the internal-combustion engine 2 is referred to as an upstream side and the side farther from the internal-combustion engine 2 is referred to as a downstream side.

To the internal-combustion engine 2, a mixed gas including oxygen and a fuel gas is supplied. The internal-combustion engine 2 converts thermal energy, which is generated by combustion of this mixed gas, into kinetic energy. The ratio between oxygen and the fuel gas supplied to the internal-combustion engine 2 is controlled by the ECU 8. The combusted mixed gas becomes exhaust gas and is emitted to the exhaust path. In this embodiment, the internal-combustion engine 2 is configured using a gasoline engine of a gasoline vehicle as a main body. Note that the internal-combustion engine 2 may be an engine other than the gasoline engine. The internal-combustion engine 2 may be, for example, diesel engine or an engine mounted on a hybrid vehicle.

The ECU 8 is electrically connected to the internal-combustion engine 2 and the sensor 9. The ECU 8 receives signals from various sensors 9 that detect the operation state of the internal-combustion engine 2 (for example, an oxygen sensor, a temperature sensor, or a pressure sensor), and controls driving of the internal-combustion engine 2. The structure of the ECU 8 may be similar to the conventional structure without particular limitations. The ECU 8 is, for example, a processor or an integrated circuit. The ECU 8 receives, for example, information about the operation state of the vehicle or the like, and the amount, the temperature, the pressure, and the like of the exhaust gas emitted from the internal-combustion engine 2. Moreover, the ECU 8 controls the operation, for example, controls the fuel injection or ignition of the internal-combustion engine 2 and controls to regulate the amount of intake air on the basis of the received information, for example.

The internal-combustion engine 2 is connected to the exhaust path 3 in an exhaust port that is not illustrated. The exhaust path 3 in this embodiment includes an exhaust manifold 4 and an exhaust pipe 5. The internal-combustion engine 2 is connected to the exhaust pipe 5 through the exhaust manifold 4. In the middle of the exhaust pipe 5, a first catalyst 6 and a second catalyst 7 are disposed in this order from the upstream side. However, the disposition of the first catalyst 6 and the second catalyst 7 may be optionally changed. Moreover, the number of the first catalysts 6 and the number of the second catalysts 7 are not limited in particular and each of them may be more than one. A third catalyst may be disposed on a downstream side of the second catalyst 7.

The exhaust gas purifying catalyst disclosed herein is disposed in the exhaust path 3 of the internal-combustion engine 2. The exhaust gas purifying catalyst disclosed herein can be used for at least one of the first catalyst 6 and the second catalyst 7.

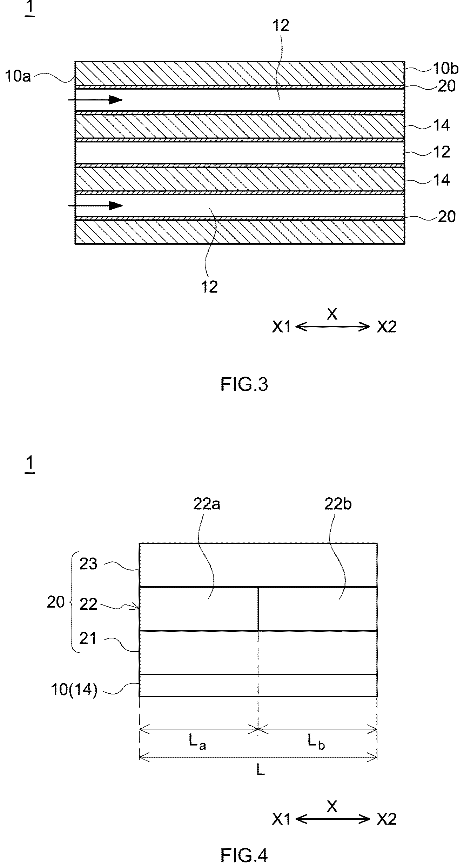

Fig. 2 is a perspective view of an exhaust gas purifying catalyst 1. The exhaust gas purifying catalyst 1 is disposed in the exhaust path of the internal-combustion engine 2 and purifies the exhaust gas emitted from the internal-combustion engine 2. The exhaust gas purifying catalyst 1 includes a base material 10 and a catalyst layer 20 formed on the base material 10 (see Fig. 3). Note that an arrow in Fig. 2, etc. indicates a flowing direction of the exhaust gas in the case of the arrangement in the exhaust path. An arrow X indicates a cylinder axis direction of the base material 10. X1 indicates the upstream side (front side) in the flowing direction of the exhaust gas and X2 indicates the downstream side (rear side) in the flowing direction of the exhaust gas.

The base material 10 is a member that forms the frame of the exhaust gas purifying catalyst 1. As illustrated in Fig. 2, the base material 10 in this embodiment has a cylindrical outer shape extending in the cylinder axis direction X. The outer shape of the base material is not limited to the shape illustrated in Fig. 2. For example, the outer shape of the base material 10 may be an elliptical cylindrical shape, a polygonal cylindrical shape, or the like. In addition, the base material 10 may be formed of a conventionally known material without particular limitations. The base material 10 may be formed of, for example, a ceramic material such as cordierite, aluminum titanate, or silicon carbide. Alternatively, the base material 10 may be formed of alloy such as stainless steel (SUS), Fe-Cr-Al-based alloy, or Ni-Cr-A1-based alloy.

Fig. 3 is a partial cross-sectional view in which a part of a cross-section of the exhaust gas purifying catalyst 1 taken along the cylinder axis direction X is magnified. As illustrated in Fig. 3, the base material 10 is a straight-flow type base material. That is to say, the base material 10 includes a plurality of cells 12 and partition walls 14 that section the plurality of cells 12. The cell 12 is a gas flow channel penetrating the base material 10 in the cylinder axis direction X. The exhaust gas supplied to the exhaust gas purifying catalyst 1 is emitted to the outside through the cells 12. Note that the shape, size, number, and the like of the cells 12 are not limited in particular. The structure of these cells 12 can be changed as appropriate in consideration of the flow rate, component, and the like of the exhaust gas. For example, as illustrated in Fig. 2, the front shape of the cell 12 in this embodiment (the shape viewed along the cylinder axis direction X) is a square. However, the front shape of the cell may be a rectangle such as a parallelogram, an oblong, or a trapezoid, another polygon (such as a triangle, a hexagon, or an octagon), a circular shape, or various other geometric shapes.

The partition wall 14 is a dense member that sections between the two adjacent cells 12. This partition wall 14 extends along the cylinder axis direction X from an upstream side end part 10a of the base material 10 to a downstream side end part 10b. Therefore, the exhaust gas having entered the cells 12 flows linearly along the cylinder axis direction X. That is to say, in the exhaust gas purifying catalyst 1 according to this embodiment, the cylinder axis direction X of the base material 10 and the flowing direction of the exhaust gas are substantially the same direction. Note that the thickness of the partition wall 14 is preferably 10 µm or more and more preferably 20 µm or more, although these thicknesses do not limit the art disclosed herein. Thus, the mechanical strength of the base material 10 can be secured sufficiently. On the other hand, the thickness of the partition wall 14 is preferably 500 µm or less and more preferably 100 µm or less. Accordingly, the hole diameter of the cell 12 can be secured sufficiently and therefore, the increase in pressure loss due to the blocking of the cell 12 can be suppressed.

The entire length and capacity of the base material 10 are not limited in particular and are preferably changed as appropriate in accordance with the performance of the internal-combustion engine 2, the size of the exhaust pipe 5, or the like. For example, the length (entire length) of the base material 10 along the cylinder axis direction X can be set in the range of 10 mm to 500 mm (preferably 50 mm to 300 mm). The volume of the base material 10 (the apparent volume including the capacity of the cells 12) may be about 0.1 to 5 L, and for example about 0.5 to 2 L.

The catalyst layer 20 is provided on a surface of the base material 10 (specifically, on the partition wall 14). The catalyst layer 20 is typically a porous body including a number of communicating gaps. In this specification, "the catalyst layer is disposed on the base material" means that the most part of the catalyst layer exists on the surface of the base material (partition wall) and does not intend to prohibit a part of the catalyst layer from entering the base material (partition wall). Typically, in the analysis based on a cross-sectional SEM image, it is possible to say "the catalyst layer is disposed on the base material" as long as 80% or more of the catalyst layer (typically, 90% or more, for example 95% or more) adheres to the surface of the base material (partition wall).

The catalyst layer 20 is a field to purify the exhaust gas. The exhaust gas that has entered the exhaust gas purifying catalyst 1 comes into contact with the catalyst layer 20 while flowing in the flow channel (cells 12) of the exhaust gas purifying catalyst 1. Thus, the toxic substance in the exhaust gas is purified.

The catalyst layer 20 is a porous layer provided on the surface of the partition wall 14 of the base material 10 as described above. The catalyst layer 20 has a porosity of preferably 1% or more, more preferably 2% or more, still more preferably 3% or more, and particularly preferably 5% or more. Such a porosity makes it easy for the exhaust gas to permeate into the catalyst layer 20; thus, more suitable purifying performance can be exhibited. On the other hand, the upper limit of the porosity of the catalyst layer 20 is preferably 40% or less, more preferably 30% or less, still more preferably 20% or less, and particularly preferably 15% or less. Thus, the strength of the catalyst layer 20 can be secured sufficiently. The porosity of the catalyst layer can be measured by performing an image analysis process on a cross-sectional SEM photograph taken along the cylinder axis direction. This image analysis process can use conventionally known analysis software such as Image-J.

Fig. 4 is a view schematically illustrating a structure of the exhaust gas purifying catalyst 1 disclosed herein. As illustrated in Fig. 4, the exhaust gas purifying catalyst 1 includes the base material 10, and the catalyst layer 20 disposed on the base material 10. The catalyst layer 20 includes a first layer 21 disposed on the base material 10, a second layer 22 disposed on the first layer 21, and a third layer 23 disposed on the second layer 22. The second layer 22 includes a second layer upstream side part 22a disposed from the upstream side end part 10a of the base material 10 (see Fig. 2) to the downstream side in the flowing direction of the exhaust gas (also the cylinder axis direction X of the base material 10), and a second layer downstream side part 22b disposed from the downstream side end part 10b of the base material 10 (see Fig. 2) to the upstream side in the flowing direction of the exhaust gas. In the exhaust gas purifying catalyst 1 disclosed herein, the second layer 22 includes a catalyst metal and a NOx storing material. When the ratio of the Pd content to the content of the catalyst metal in the second layer upstream side part 22a is a Pd content ratio A and the ratio of the Pd content to the content of the catalyst metal in the second layer downstream side part 22b is a Pd content ratio B, the Pd content ratio A is less than 0.5 and the Pd content ratio A is higher than the Pd content ratio B.

The catalyst metal is a metal material that promotes oxidization (or reduction) of the toxic substances (HC, CO, NOx) in the exhaust gas. Specifically, the oxidation reaction of hydrocarbon (HC) and carbon monoxide (CO) is promoted by the contact with the catalyst metal. Thus, HC and CO are converted into water (H₂O) and carbon dioxide (CO₂). On the other hand, the reduction reaction of nitrogen oxide (NOx) is promoted by the contact with the catalyst metal. Thus, NOx is converted into water (H₂O) and nitrogen (N₂). Specific examples of the catalyst metal include precious metal catalysts such as gold (Au), silver (Ag), palladium (Pd), platinum (Pt), rhodium (Rh), and ruthenium (Ru).

The NOx storing material is a component with functions of temporarily storing NOx as a nitrate when the air-fuel ratio of the mixed gas is in an oxygen-excess (lean) state, and releasing the stored NOx when the air-fuel ratio is changed to a stoichiometric to rich state. As such a NOx storing material, a material containing a metal that can donate an electron to NOx (typically, a basic material) can be used. Examples of the NOx storing material include alkali metals such as lithium (Li), potassium (K), and cesium (Cs), alkaline-earth metals such as magnesium (Mg), calcium (Ca), strontium (Sr), and barium (Ba), and the like. The NOx storing material may be contained in a form of oxide, hydroxide, carbonate, nitrate, sulfate, phosphate, acetate, formate, oxalate, halide, or the like of the alkali metal or the alkaline-earth metal element. Among these, the NOx storing material preferably contains the alkaline-earth metal and more preferably contains Ba from the viewpoint of having high NOx storage capacity. Although there is no particular limitation, for example, the NOx storing material can be contained as barium carbonate in the second layer 22. The second layer 22 may include two or more kinds of the aforementioned NOx storing materials.

When the air-fuel ratio of the mixed gas is in the oxygen-excess (lean) state, the NOx storing material temporarily stores NOx as a nitrate as described above but this reaction can occur with NO₂ that results from oxidation of nitrogen monoxide (NO). In the exhaust gas, NOx mostly exists as NO and in order for the NOx storing material to store NOx suitably as a nitrate, it is necessary to oxidize the NO. In the catalyst metal, Pd and Pt are highly active as an oxidizing catalyst and the present inventors' examination indicates that Pt, in particular, has the high NO oxidizing performance in the lean atmosphere. On the other hand, Pt tends to have low heat resistance and for example, under an environment where the temperature is high and the atmosphere varies like in a gasoline vehicle, the catalyst performance tends to decrease due to sintering of Pt. Therefore, in order to exhibit the high NOx storing performance even after the long use, the heat resistance (durability) of Pt in the lean atmosphere is preferably improved. In view of this, in the exhaust gas purifying catalyst 1 disclosed herein, the second layer upstream side part 22a contains the NOx storing material and at least Pd and Pt as the catalyst metal. By further containing Pd in addition to the NOx storing material and Pt, the heat resistance of Pt can be improved. In particular, in the upstream side part in the flowing direction of the exhaust gas, the exhaust gas with high temperature tends to enter. That is to say, the second layer upstream side part 22a containing Pd makes it possible to improve the heat resistance of Pt and even after the long use, improve the NOx storing performance because the NO oxidizing performance of Pt is suitably exhibited. Accordingly, the exhaust gas purifying catalyst 1 with the high NOx storing performance can be achieved.

The second layer upstream side part 22a contains Pd as the catalyst metal as described above. Here, the ratio (the Pd content/the content of the catalyst metal) of the Pd content (g/L) in the second layer upstream side part 22a to the content (g/L) of the catalyst metal in the second layer upstream side part 22a is defined as the Pd content ratio A. At this time, based on the relation with a Pt content ratio C to be described below, for example, the Pd content ratio A is preferably less than 0.5, more preferably 0.4 or less, and still more preferably 0.3 or less. On the other hand, as described above, the second layer upstream side part 22a containing Pd improves the heat resistance of Pt and improves the NOx storing performance. From such a viewpoint, in the second layer upstream side part 22a, the Pd content ratio A is more than 0, typically 0.01 or more, preferably 0.05 or more, and more preferably 0.1 or more.

The second layer upstream side part 22a contains Pt as the catalyst metal as described above. Containing Pt makes the oxidation of NO progress suitably and the NOx storing material makes it easy to store NOx. Here, the ratio (the Pt content/the content of the catalyst metal) of the Pt content (g/L) in the second layer upstream side part 22a to the content (g/L) of the catalyst metal in the second layer upstream side part 22a is defined as the Pt content ratio C. From the viewpoint of increasing the NOx storing amount, the Pt content ratio C is preferably 0.5 or more, more preferably 0.6 or more, and still more preferably 0.7 or more. On the other hand, containing a predetermined amount of Pd can improve the heat resistance (durability) of Pt. From such a viewpoint, the Pt content ratio C is preferably less than 1, for example 0.99 or less, more preferably 0.95 or less, and still more preferably 0.9 or less.

The Pd content in the second layer upstream side part 22a is preferably 0.1 g/L to 1.5 g/L and more preferably 0.1 g/L to 0.75 g/L, although there is no particular limitation. The Pt content in the second layer upstream side part 22a is preferably 0.5 g/L to 2.5 g/L and more preferably 1 g/L to 1.75 g/L, although there is no particular limitation.

The content of the NOx storing material in the second layer upstream side part 22a is preferably 10 g/L or more, more preferably 15 g/L or more, still more preferably 20 g/L or more, and particularly preferably 30 g/L or more, although there is no particular limitation. Accordingly, the chemical reaction between the NOx storing material (more specifically, the alkali metal and/or the alkaline-earth metal) and NO₂ suitably progresses and NOx can be stored temporarily as a nitrate. The upper limit of the content of the NOx storing material is preferably 50 g/L or less for example, and may be 45 g/L or less or 40 g/L or less, although there is no particular limitation. In this specification, "the content of the NOx storing material" can be measured using, for example, inductively coupled plasma (ICP), an electron probe micro-analyzer (EPMA), X-ray fluorescence (XRF), or the like.

The second layer upstream side part 22a may contain an optional component other than the aforementioned catalyst metal and NOx storing material. Examples of such an optional component include an oxygen storage capacity (OSC) material with oxygen storing capability, a stabilizer, and the like.

Examples of the OSC material include ceria, a ceria-containing complex oxide such as a CZ complex oxide (CeO₂-ZrO₂ complex oxide), and the like. The CZ complex oxide may further contain rare earth oxide, alkali metal oxide, alkaline-earth metal oxide, transition metal species, alumina, silica, or the like in addition to CeO₂ and ZrO₂. The CZ complex oxide may be a polycrystal body or a single-crystal body. In a case where the second layer upstream side part 22a includes the OSC material, the content of the OSC material is preferably 30 g/L to 100 g/L and more preferably 50 g/L to 90 g/L, for example, although there is no particular limitation. In this specification, "the content of the OSC material" can be measured by using, for example, ICP, EPMA, XRF, or the like described above.

The second layer downstream side part 22b of the exhaust gas purifying catalyst 1 disclosed herein includes the NOx storing material and at least Pt as the catalyst metal. Thus, the NO oxidizing operation of Pt is suitably exhibited and the NOx storing performance is improved.

In the second layer downstream side part 22b, the exhaust gas with high temperature enters less easily and Pt tends to deteriorate less easily than in the second layer upstream side part 22a. Therefore, the second layer downstream side part 22b may or may not contain Pd as the catalyst metal. From the viewpoint of improving the heat resistance (durability) of Pt, the second layer downstream side part 22b preferably contains Pt and Pd as the catalyst metal. Here, the ratio (the Pd content/the content of the catalyst metal) of the Pd content (g/L) in the second layer downstream side part 22b to the content (g/L) of the catalyst metal in the second layer downstream side part 22b is defined as the Pd content ratio B. At this time, the Pd content ratio B is lower than the Pd content ratio A. The Pd content ratio B is not limited in particular as long as being lower than the Pd content ratio A, and is preferably less than 0.3 and more preferably 0.2 or less, for example. The Pd content ratio B may be 0; however, the Pd content ratio B is preferably more than 0, for example 0.05 or more, and may be 0.1 or more from the viewpoint of improving the heat resistance of Pt. In another example, the Pd content ratio B is preferably 0.05 or more and 0.1 or less.

The second layer downstream side part 22b contains Pt as the catalyst metal as described above. Here, the ratio (the Pt content/the content of the catalyst metal) of the Pt content (g/L) in the second layer downstream side part 22b to the content (g/L) of the catalyst metal in the second layer downstream side part 22b is defined as a Pt content ratio D. In the second layer downstream side part 22b, the exhaust gas with high temperature enters less easily and Pt tends to deteriorate less easily than in the second layer upstream side part 22a. Therefore, it is preferable that Pt with the suitable NO oxidizing performance be contained more. From such a viewpoint, the Pt content ratio D is preferably 0.7 or more, more preferably 0.8 or more, and still more preferably 0.9 or more. The Pt content ratio D may be 1; however, containing Pd can improve the heat resistance (durability) of Pt and secure the suitable NOx storing performance even after long use. From such a viewpoint, the Pt content ratio D may be less than 1, for example 0.95 or less.

The Pd content in the second layer downstream side part 22b is preferably 0 g/L to 1.5 g/L, more preferably 0.1 g/L to 0.5 g/L, and still more preferably 0.1 g/L to 0.25 g/L, although there is no particular limitation. The Pt content in the second layer downstream side part 22b is preferably 0.5 g/L to 3 g/L and more preferably 1.5 g/L to 2.5 g/L, although there is no particular limitation.

Note that the Pd content and the Pt content in the second layer upstream side part 22a and the second layer downstream side part 22b can be obtained by using ICP and EPMA. The procedure of measuring the Pd content in the second layer upstream side part will be described below as one example. First, a sample is created by cutting an upstream side region of the first layer to the third layer from the exhaust gas purifying catalyst so that the entire second layer upstream side part is included. Next, the sample is crushed into a powder body, which is subjected to ICP; thus, the total weight (g) of Pd in the upstream side region is measured. In addition, the cross section of the upstream side region along the cylinder axis direction is subjected to EPMA; thus, an element map of the upstream side region is acquired. Then, based on this element map, a ratio (Pd₂₂ₐ/Pdₜₒₜₐₗ) of a Pd existence amount Pd₂₂ₐ in the second layer upstream side part to a Pd existence amount Pdₜₒₜₐₗ in the upstream side region is calculated. Note that this element map can be analyzed using conventionally known image analysis software (such as Image-J). Then, by multiplying "the total weight (g) of Pd" acquired by ICP by "the Pd existence ratio (Pd₂₂ₐ/Pdₜₒₜₐₗ) acquired by the element map", the weight (g) of Pd in the second layer upstream side part can be calculated. In addition, by dividing this calculation result by the capacity (L) of the base material, "the Pd content (g/L) in the second layer upstream side part" can be calculated.

The content of the NOx storing material in the second layer downstream side part 22b is preferably 10 g/L or more, more preferably 15 g/L or more, still more preferably 20 g/L or more, and particularly preferably 30 g/L or more, although there is no particular limitation. Accordingly, the chemical reaction between the NOx storing material (more specifically, the alkali metal and/or the alkaline-earth metal) and NO₂ suitably progresses and NOx can be stored as a nitrate. The upper limit of the content of the NOx storing material is preferably 50 g/L or less for example, and may be 45 g/L or less or 40 g/L or less, although there is no particular limitation.

The second layer downstream side part 22b may include an optional component other than the catalyst metal and the NOx storing material described above (for example, other catalyst metal and OSC material, etc.). When the second layer downstream side part 22b includes the OSC material, the content of the OSC material is preferably 30 g/L to 100 g/L and more preferably 50 g/L to 90 g/L, for example, although there is no particular limitation.

As described above, the exhaust gas with high temperature easily enters the second layer upstream side part 22a and accordingly, the effect of improving the heat resistance of Pt by containing Pd can be exhibited more suitably. From such a viewpoint, the Pd content ratio A is preferably higher than the Pd content ratio B. Specifically, a ratio (A/B) of the Pd content ratio A to the Pd content ratio B is preferably 1.5 or more or may be 2 or more, and is more preferably 3 or more or may be 6 or more. The upper limit of the ratio (A/B) of the Pd content ratio A to the Pd content ratio B is preferably about 10 or less, for example, although there is no particular limitation.

The second layer 22 contains at least Pd and Pt as the catalyst metal on the basis of the aforementioned viewpoint. From the viewpoint of increasing the NOx storing amount suitably, the total Pt content (g/L) is preferably more than the total Pd content (g/L) in the second layer 22. The ratio of the total Pd content and the total Pt content in the second layer 22 is not limited in particular; however, the ratio of the total Pt content (g/L) in the second layer 22 to the Pd content (g/L) in the second layer 22 (hereinafter this ratio is also called "Pt/Pd" simply) is preferably 3 or more and more preferably 4 or more, and may be 4.5 or more. From the viewpoint of improving the heat resistance of Pt suitably, Pt/Pd in the second layer 22 is preferably 6 or less and may be 5.7 or less, for example.

The Pd content in the second layer 22 is preferably 0.1 g/L to 1.5 g/L and more preferably 0.5 g/L to 1.25 g/L, although there is no particular limitation. In addition, the Pt content in the second layer 22 is preferably 1 g/L to 5.5 g/L and more preferably 3.5 g/L to 5 g/L, although there is no particular limitation.

The second layer upstream side part 22a is disposed from the upstream side end part 10a of the exhaust gas purifying catalyst (base material) to the downstream side. A length La of the second layer upstream side part 22a in the cylinder axis direction may be smaller than a total length L of the base material. The length La of the second layer upstream side part 22a in the cylinder axis direction may be 20% or more (for example, 25% or more, preferably 30% or more, and more preferably 40% or more) and 80% or less (for example, 75% or less, preferably 70% or less, more preferably 65% or less, and for example 60% or less) of the total length L of the exhaust gas purifying catalyst, although there is no particular limitation.

The second layer downstream side part 22b is disposed from the downstream side end part 10b of the exhaust gas purifying catalyst (base material) to the upstream side. A length Lb of the second layer downstream side part 22b in the cylinder axis direction may be smaller than the total length L of the base material. The length Lb of the second layer downstream side part 22b in the cylinder axis direction may be 20% or more (for example, 25% or more, preferably 30% or more, and more preferably 40% or more) and 80% or less (for example, 75% or less, preferably 70% or less, more preferably 65% or less, and for example 60% or less) of the total length L of the exhaust gas purifying catalyst, although there is no particular limitation.

Although there is no particular limitation, it is preferable that the second layer upstream side part 22a be formed in a part corresponding to about 50% of the length L of the exhaust gas purifying catalyst (base material) (that is, 1/2 of the total length of the base material), and the second layer downstream side part 22b be formed in a part corresponding to about 50% of the length L of the exhaust gas purifying catalyst (base material) (that is, 1/2 of the total length of the base material). Thus, the structure can be made drastically different between the second layer upstream side part 22a and the second layer downstream side part 22b and the effect of the present application can be exhibited at a high level.

The total (La + Lb) of the length La of the second layer upstream side part 22a in the cylinder axis direction and the length Lb of the second layer downstream side part 22b in the cylinder axis direction preferably satisfies La + Lb ≅ L. With such an aspect, there will be no exhaust gas that penetrates the partition wall without passing the second layer 22, making it possible to store NOx more suitably. However, the total (La + Lb) of the length La of the second layer upstream side part 22a in the cylinder axis direction and the length Lb of the second layer downstream side part 22b in the cylinder axis direction may satisfy, for example, L ≤ La + Lb < 2L or may satisfy L ≤ La + Lb < 1.5L. That is to say, the exhaust gas purifying catalyst disclosed herein can have a multilayer structure (for example, vertical two-layer structure) in which the second layer upstream side part 22a and the second layer downstream side part 22b partially overlap with each other at a central part in the cylinder axis direction. In that case, from the viewpoint of improving the heat resistance of Pt, the second layer upstream side part 22a is preferably disposed on a surface side in contact with the exhaust gas (on a side farther from the surface of the partition wall 14).

The coating amount of each of the second layer upstream side part 22a and the second layer downstream side part 22b is not limited in particular. From the viewpoint of reducing the pressure loss by making it easy for the exhaust gas to pass through the partition wall 14, the coating amount of each of the second layer upstream side part 22a and the second layer downstream side part 22b per liter of the volume of the base material is about 200 g/L or less and preferably 180 g/L or less, and may be 155 g/L or less, for example. On the other hand, from the viewpoint of increasing the NOx storing amount and further improving the other exhaust gas purifying performance, the coating amount of each of the second layer upstream side part 22a and the second layer downstream side part 22b per liter of the volume of the base material 10 is about 10 g/L or more and preferably 30 g/L or more, and may be 50 g/L or more, for example. By satisfying this range, both the reduction of the pressure loss and the improvement of the exhaust gas purifying performance can be achieved at a higher level. Note that the coating amount of the second layer upstream side part 22a refers to the weight of the second layer upstream side part 22a included in the base material 10 per unit volume. In addition, the coating amount of the second layer downstream side part 22b refers to the weight of the second layer downstream side part 22b included in the base material 10 per unit volume. However, regarding the volume of the base material, just a part of the base material where the second layer 22 is formed along the cylinder axis direction X is considered and a part of the base material where the second layer 22 is not formed is not considered.

The coating amount ratio of the second layer downstream side part 22b to the second layer upstream side part 22a is preferably 0.9 or more and 1.1 or less, although there is no particular limitation. By making the coating amount substantially uniform between the second layer upstream side part 22a and the second layer downstream side part 22b (that is, within the range of the aforementioned coating amount ratio), the NOx storing performance can be improved. The reason why such an effect is obtained is presumed as below, although there is no intention to limit the art disclosed herein. The NO oxidizing reaction tends not to progress. Therefore, by making the coating amount substantially uniform between the second layer upstream side part 22a and the second layer downstream side part 22b as described above, the flow rate of the exhaust gas becomes constant, so that NO and the catalyst metal can be brought into contact with each other more frequently. Thus, it is presumed that the NO oxidizing reaction can be promoted suitably. That is to say, in the art disclosed herein, the NOx storing performance can be improved compared to the conventional art by adjusting the Pd content and the Pt content as described above even though the coating amount is substantially uniform between the second layer upstream side part 22a and the second layer downstream side part 22b per liter of the volume of the base material.

As illustrated in Fig. 3, the first layer 21 is disposed on a side closer to the surface of the base material 10 than the second layer 22 and the third layer in a thickness direction that is orthogonal to the cylinder axis direction X. The first layer 21 is, for example, preferably disposed on the surface of the partition wall 14. The first layer 21 contains at least Pd as the catalyst metal.

The first layer 21 can have a function of purifying the exhaust gas with low speed that is supplied during a warming operation. Specifically, the exhaust gas in the warming operation flows so slowly that this exhaust gas tends to permeate into the catalyst layer 20 from the upstream side of the exhaust gas purifying catalyst 1 and reach the first layer 21. At the start of the operation, the catalyst metal is mostly oxidized and the catalyst activity is low. Then, when the warming operation is started, oxygen is gradually detached from the catalyst metal as the temperature of the exhaust gas increases, so that the purifying performance increases (is recovered). Pd is superior in catalyst activity in the oxidized state to another catalyst metal. Therefore, when the first layer 21 contains at least Pd as the catalyst metal, a certain degree of the exhaust gas purifying performance can be exhibited even before the recovery (detachment of oxygen) by the warming operation progresses sufficiently. Accordingly, the emission of the toxic substances during the warming operation can be further reduced.

The Pd content in the first layer 21 is preferably 0.5 g/L or more, more preferably 1.0 g/L or more, still more preferably 2 g/L or more, and particularly preferably 2.3 g/L or more. Thus, the emission of the toxic substances during the warming operation can be reduced more suitably. The Pd content in the first layer 21 is preferably 10 g/L or less, more preferably 8 g/L or less, still more preferably 6 g/L or less, and particularly preferably 5 g/L or less, although there is no particular limitation. Note that the Pd content in the first layer 21 can be obtained by a measurement method using ICP and EPMA as described above.

The first layer 21 may include an optional component other than the aforementioned catalyst metal. Examples of such an optional component include an OSC material, another catalyst metal, a promotor that does not carry the catalyst metal, a stabilizer, and the like. Preferred examples of the promotor include alkaline-earth metal elements such as barium (Ba) and strontium (Sr). The promotor may be contained in a form of oxide, hydroxide, carbonate, nitrate, sulfate, phosphate, acetate, formate, oxalate, halide, or the like of the alkaline-earth metal element. The first layer 21 preferably contains barium sulfate as the promotor. The content of the alkaline-earth metal element such as Ba in the first layer 21 may be, for example, about 0.1 g/L to 10 g/L (preferably 1 g/L to 10 g/L) per liter of the volume of a part of the base material where the first layer 21 is formed along the cylinder axis direction X. Although there is no particular limitation, co-existence of Pd as the catalyst metal and the promotor component (particularly, Ba) in the first layer 21 makes it possible to suppress sintering of Pd due to electron donation from Ba to Pd, so that the catalyst activity of Pd can be improved. Therefore, in the case where the promotor component is included, it is preferable that the first layer 21 contain the promotor component to make the promotor component co-exist with Pd.

When the total length L of the base material 10 is 100%, for example, the length of the first layer 21 along the cylinder axis direction X may be 80% or more, 90% or more, or 100% (that is, the same length as the total length L of the base material 10) from the upstream side end part 10a, although the length is not limited in particular. In addition, the coating amount of the first layer 21 is not limited in particular. From the viewpoint of reducing the pressure loss by making it easy for the exhaust gas to pass through the partition wall 14, the coating amount of the first layer 21 per liter of the volume of the base material 10 is about 80 g/L to 150 g/L and preferably 100 g/L to 120 g/L. Note that the coating amount of the first layer 21 refers to the weight of the first layer 21 included in the base material 10 per unit volume. However, regarding the volume of the base material, just a part of the base material where the first layer 21 is formed along the cylinder axis direction X is considered and a part of the base material where the first layer 21 is not formed is not considered.

As illustrated in Fig. 3, the third layer 23 is disposed on a side farther from the surface of the base material 10 than the first layer 21 and the second layer 22 in the thickness direction that is orthogonal to the cylinder axis direction X. The third layer 23 can be disposed on the most surface layer side in the catalyst layer 20. The third layer 23 contains at least Rh as the catalyst metal.

The third layer 23 can be a region where the exhaust gas comes into contact first in the catalyst layer 20. When HC and CO included in the exhaust gas have reached the second layer 22, the oxidizing operation of Pt acts on HC and CO first, and the oxidizing performance for NO can decrease. Rh has high catalyst performance (typically, ternary performance). Therefore, in the exhaust gas purifying catalyst 1 disclosed herein, the third layer 23 that can come into contact with the exhaust gas before the second layer 22 contains at least Rh as the catalyst metal. Accordingly, HC and CO are easily purified in the third layer 23 suitably and Pt included in the second layer 22 can exhibit the NO oxidizing performance without being interrupted by HC and CO. Thus, the NOx purifying performance of the entire exhaust gas purifying catalyst can be improved.

In the third layer 23, the ratio of the Rh content to the content of the catalyst metal (the Rh content/the content of the catalyst metal) is preferably 0.5 or more and more preferably 0.6 or more, for example.

The Rh content in the third layer 23 is preferably 0.01 g/L or more, more preferably 0.1 g/L or more, and still more preferably 0.2 g/L or more. Thus, the suitable purifying performance can be exhibited. The Rh content in the third layer 23 is preferably 1 g/L or less and more preferably 0.8 g/L or less, and may be 0.5 g/L or less, although there is no particular limitation. Note that the Rh content in the third layer 23 can be obtained by the measurement method using ICP and EPMA as described above.

Although there is no particular limitation, the third layer 23 preferably contains Pd in addition to Rh as the catalyst metal. Pd is highly active as the oxidizing catalyst in particular, and can exhibit the high oxidizing operation for CO and HC described above among the toxic substances in the exhaust gas. Therefore, CO and HC can be purified more suitably and the reach of HC and CO for the second layer 22 can be suppressed more. Thus, the NOx purifying performance of the entire exhaust gas purifying catalyst can be improved more suitably.

When the third layer 23 contains Pd, the Pd content in the third layer 23 is preferably 0.01 g/L or more, more preferably 0.05 g/L or more, and still more preferably 0.1 g/L or more, for example, although there is no particular limitation. Accordingly, the suitable purifying performance can be exhibited. The Pd content in the third layer 23 is preferably 1 g/L or less and more preferably 0.5 g/L or less, and may be 0.3 g/L or less, although there is no particular limitation. The Pd content in the third layer 23 can be obtained by the measurement method using ICP and EPMA as described above.

The third layer 23 may include an optional component other than the aforementioned catalyst metal. Examples of such an optional component include an OSC material, another catalyst metal, a stabilizer, and the like.

When the total length L of the base material 10 is 100%, for example, the length of the third layer 23 along the cylinder axis direction X may be 80% or more, 90% or more, or 100% (that is, the same length as the total length L of the base material 10) from the upstream side end part 10a, although the length is not limited in particular. In addition, the coating amount of the third layer 23 is not limited in particular. From the viewpoint of reducing the pressure loss by making it easy for the exhaust gas to pass through the partition wall 14, the coating amount of the third layer 23 per liter of the volume of the base material 10 is about 50 g/L to 150 g/L and preferably 70 g/L to 100 g/L. Note that the coating amount of the third layer 23 refers to the weight of the third layer 23 included in the base material 10 per unit volume. However, regarding the volume of the base material, just a part of the base material where the third layer 23 is formed along the cylinder axis direction X is considered and a part of the base material where the third layer 23 is not formed is not considered.

The catalyst layer 20 can include, in addition to the catalyst metal contained in each of the first layer 21, the second layer 22, and the third layer 23, a carrier that carries the catalyst metal. As such a carrier, a carrier (typically, a powder body) known to be usable for this kind of application can be employed as appropriate. Preferred examples of the carrier include metal oxides such as alumina (Al₂O₃), alkaline-earth metal oxides, rare-earth metal oxides, alkali metal oxides, ceria (CeO₂), zirconia (ZrO₂), silica (SiO₂), magnesia (MgO), and titania (TiO₂), and solid solutions thereof such as ceria-zirconia complex oxide (CZ complex oxide: CeO₂-ZrO₂). Any of these may be used alone or two or more kinds thereof may be used in combination. In particular, it is preferable to use at least one of alumina and the CZ complex oxide. The carrier may be a polycrystal body or a single-crystal body.

The shape (outer shape) of the carrier is not limited in particular, and from the viewpoint of being able to secure larger specific surface area, a powder carrier is preferably used. For example, the average particle diameter of the carrier (average particle diameter measured by laser diffraction/scattering method) may be, for example, 20 µm or less, 10 µm or less, or 7 µm or less. The lower limit of the average particle diameter is not limited in particular and may be, for example, 0.1 µm or more or 0.5 µm or more. By the use of the carrier with such an average particle diameter, the dispersibility of the catalyst metal, the heat resistance of the carrier itself, and the like can be improved.

The content of the catalyst metal in the entire catalyst layer is preferably 0.5 g/L or more, more preferably 1 g/L or more, and still more preferably 2 g/L or more per liter of the volume of a part of the base material where the catalyst layer 20 is formed along the cylinder axis direction X, for example, although there is no particular limitation. The upper limit of the content of the catalyst metal is preferably 8 g/L or less and more preferably 7 g/L or less, and may be 6 g/L or less per liter of the volume of the part of the base material where the catalyst layer 20 is formed along the cylinder axis direction X, for example, although there is no particular limitation. In addition, the coating amount of the entire catalyst layer is about 150 g/L to 450 g/L, preferably 200 g/L to 400 g/L, and more preferably 250 g/L to 350 g/L per liter of the volume of the base material 10.

The exhaust gas purifying catalyst 1 with the aforementioned structure can be manufactured by a method as below, for example. First, the base material 10 and a slurry for forming the catalyst layer 20 are prepared. As the slurry, a first layer formation slurry, a second layer upstream side part formation slurry, a second layer downstream side part formation slurry, and a third layer formation slurry are prepared. These catalyst layer formation slurries include different catalyst metal components (typically, solutions containing the catalyst metal as ions) as necessary components. In addition, each catalyst layer formation slurry can include another optional component, such as a carrier, a NOx storing material, a promotor, an OSC material, a binder, various additives, or the like. Note that, as the NOx storing material, a nitrate, a carbonate, a sulfate, or the like of the alkaline-earth metal is given. As the binder, alumina sol, silica sol, or the like can be employed. The properties of the slurry (viscosity, solid content ratio, and the like) may be adjusted as appropriate in accordance with the size of the base material 10 to be used, the form of the cell 12 (partition wall 14), the desired properties of the catalyst layer 20, and the like. For example, the viscosity of these slurries can be controlled by cellulose polymers such as carboxymethyl cellulose (CMC), methyl cellulose (MC), hydroxypropyl methylcellulose (HPMC), and hydroxyethyl methyl cellulose (HEMC).

The first layer 21, the second layer 22, and the third layer 23 can be formed by a conventionally used method, such as an impregnation method or a wash-coating method. In one example, the prepared first layer formation slurry is fed into the cell 12 from an end part of a suitable base material (for example, honeycomb base material) and supplied to a predetermined length along the cylinder axis direction X. At this time, the extra slurry may be discharged out of the cell 12. The base material to which the slurry is supplied is dried and sintered at predetermined temperature; thus, the first layer 21 can be formed on the surface of the partition wall 14 of the base material 10. The drying may be performed at about 50°C to 150°C (preferably 50°C to 90°C) for 30 minutes to 2 hours, for example. In addition, the sintering may be performed in an oxygen-containing atmosphere (for example, in the air) with a sintering temperature of about 450°C to 1000°C, for example at 500°C to 700°C.

Next, the second layer upstream side part formation slurry is fed into the cell 12 from one end part of the base material (upstream side end part 10a) and supplied to a predetermined length along the cylinder axis direction X toward an exit side direction. Then, drying and sintering processes are performed under conditions similar to those above; thus, the second layer upstream side part 22a can be formed. Similarly, the second layer downstream side part formation slurry is fed into the cell 12 from the other end part of the base material (downstream side end part 10b) and supplied to a predetermined length along the cylinder axis direction X toward an entrance side direction. Then, drying and sintering processes are performed under conditions similar to those above; thus, the second layer downstream side part 22b can be formed.

Next, the third layer formation slurry is fed into the cell 12 from the end part of the base material 10 and supplied to a predetermined length along the cylinder axis direction X. Then, drying and sintering processes are performed under conditions similar to those above; thus, the third layer 23 can be formed.

The exhaust gas purifying catalyst described above can be used suitably for purifying the exhaust gas emitted from the internal-combustion engines of, in addition to vehicles such as an automobile and a truck, a motorcycle, and a bicycle with a motor, marine products such as a vessel, a tanker, a water bike, a personal watercraft, and an outboard motor, garden products such as a mowing machine, a chain saw, and a trimmer, leisure products such as a golf cart and a four-wheeled buggy, generator sets such as a cogeneration system, an incinerator, and the like.

Text Examples of the art disclosed herein will hereinafter be described. Note that it is not intended that the following description will limit the art disclosed herein to these Test Examples.

### <Example 1>

First, a honeycomb base material of a straight flow type with a cylindrical shape (diameter: 118.4 mm, length L in cylinder axis direction: 114.3 mm, capacity: 1.26 L) was prepared as the base material. Next, four kinds of slurries (first layer formation slurry, second layer upstream side part formation slurry, second layer downstream side part formation slurry, and third layer formation slurry) were prepared.

Specifically, the first layer formation slurry was prepared by mixing a palladium nitrate aqueous solution, ceria-zirconia complex oxide powder (CZ), alumina powder (Al₂O₃), and barium sulfate (BaSO₄) as the promotor in an ion exchanged water. The second layer upstream side part formation slurry was prepared by mixing a platinum nitrate aqueous solution, a palladium nitrate aqueous solution, alumina powder (Al₂O₃), ceria-zirconia complex oxide powder (CZ), and barium carbonate (BaCO₃) as the NOx storing material in an ion exchanged water. The second layer downstream side part formation slurry was prepared by mixing a platinum nitrate aqueous solution, a palladium nitrate aqueous solution, ceria-zirconia complex oxide powder (CZ), alumina powder (Al₂O₃), barium carbonate (BaCO₃) as the NOx storing material in an ion exchanged water. The third layer formation slurry was prepared by mixing a rhodium nitrate aqueous solution, a palladium nitrate aqueous solution, ceria-zirconia complex oxide powder (CZ), and alumina powder (Al₂O₃) in an ion exchanged water. Each of the aforementioned slurries had the particle diameter controlled by milling.

Next, each layer was coated. The first layer formation slurry prepared as above was poured from the upstream side end part of the base material and sucked by a blower, so that a part of the base material that corresponded to 100% of the total length in the cylinder axis direction was coated. The coating amount of the first layer formation slurry was adjusted so that the content of Pd became 2.35 g/L, the content of the OSC material became 40 g/L, the content of alumina became 67 g/L, and the content of barium sulfate became 5 g/L. Then, this was subjected to draught drying in a drying machine at 90°C for one hour, which was followed by one-hour sintering at 500°C in an electric furnace. Thus, the first layer was formed on the surface of the base material.

The second layer upstream side part formation slurry prepared as above was poured from the upstream side end part of the base material and sucked by the blower, so that a part of the base material that corresponded to 50% of the total length in the cylinder axis direction was coated. The coating amount of the second layer upstream side part formation slurry was adjusted so that the content of Pd became 0.75 g/L, the content of Pt became 1.75 g/L, the content of the OSC material became 90 g/L, the content of alumina became 30 g/L, and the content of barium carbonate became 30 g/L. Then, this was subjected to draught drying in the drying machine at 90°C for one hour, which was followed by one-hour sintering at 500°C in the electric furnace. Thus, the second layer upstream side part was formed on the surface of the first layer.

The second layer downstream side part formation slurry prepared as above was poured from the downstream side end part of the base material and sucked by the blower, so that a part of the base material that corresponded to 50% of the total length in the cylinder axis direction was coated. The coating amount of the second layer downstream side part formation slurry was adjusted so that the content of Pd became 0.50 g/L, the content of Pt became 2.00 g/L, the content of the OSC material became 90 g/L, the content of alumina became 30 g/L, and the content of barium carbonate became 30 g/L. Then, this was subjected to draught drying in the drying machine at 90°C for one hour, which was followed by one-hour sintering at 500°C in the electric furnace. Thus, the second layer downstream side part was formed on the surface of the first layer.

The third layer formation slurry prepared as above was poured from the downstream side end part of the base material and sucked by the blower, so that a part of the base material that corresponded to 100% of the total length in the cylinder axis direction was coated. The coating amount of the third layer formation slurry was adjusted so that the content of Rh became 0.2 g/L, the content of Pd became 0.1 g/L, the content of the OSC material became 20 g/L, and the content of alumina became 64 g/L. Then, this was subjected to draught drying in the drying machine at 90°C for one hour, which was followed by one-hour sintering at 500°C in the electric furnace. Thus, the third layer was formed on the surface of the second layer. In this manner, an exhaust gas purifying catalyst according to Example 1 including the first layer, the second layer upstream side part, the second layer downstream side part, and the third layer was obtained.

### <Examples 2 to 4 and Comparative Examples 1 to 10>

The Pt content and the Pd content in the second layer upstream side part and the Pt content and the Pd content in the second layer downstream side part were made different as shown in Table 1. Similarly to Example 1 except these, exhaust gas purifying catalysts according to Examples 2 to 4 and Comparative Examples 1 to 10 were obtained. Note that "the Pd content ratio A of the second layer upstream side part" shown in Table 1 is a value calculated from the ratio (the Pd content/the total content of the catalyst metal) of the Pd content (g/L) in the second layer upstream side part to the total content (g/L) of the catalyst metal in the second layer upstream side part, and "the Pt content ratio C of the second layer upstream side part" is a value calculated from the ratio (the Pt content/the total content of the catalyst metal) of the Pt content (g/L) in the second layer upstream side part to the total content (g/L) of the catalyst metal in the second layer downstream side part. In addition, "the Pd content ratio B of the second layer downstream side part" shown in Table 1 is a value calculated from the ratio (the Pd content/the total content of the catalyst metal) of the Pd content (g/L) in the second layer downstream side part to the total content (g/L) of the catalyst metal in the second layer downstream side part, and "the Pt content ratio D of the second layer downstream side part" is a value calculated from the ratio (the Pt content/the total content of the catalyst metal) of the Pt content (g/L) in the second layer downstream side part to the total content (g/L) of the catalyst metal in the second layer downstream side part. Moreover, "Pt/Pd" shown in Table 1 refers to the ratio of the total Pt content in the second layer to the total Pd content in the second layer.

### <Evaluation of NOx storing performance>

The NOx storing performance in each of Examples and Comparative Examples was subjected to an evaluation test. The catalyst in each of Examples and Comparative Examples was installed in an engine (engine displacement 4.8 L) and held for 50 hours with a catalyst bed temperature of 1000°C; thus, a durability test was carried out. After the durability test, the catalyst temperature was adjusted to be 100°C or less. Then, the inlet gas temperature of the catalyst was adjusted to 300°C using a heat exchanger and the exhaust gas was introduced. The air-fuel ratio (λ) of the exhaust gas at this time was controlled to be 1.08. Next, a NOx concentration P1 of the gas flowing into the catalyst and a NOx concentration P2 of the gas flowing out of the catalyst were measured. Then, the difference between P1 and P2 (P1 - P2) was calculated as the NOx storing amount (mg/L). The results are shown in Table 1. It can be said that the NOx storing performance is higher as the NOx storing amount is larger.

### [Table 1]

**Table 1**

| | Second layer upstream side part | | | | | Second layer downstream side part | | | | | Second layer (total of upstream side part and downstream side part) | | | NOx storing amount (mg/L) |
|---|---|---|---|---|---|---|---|---|---|---|---|---|---|---|
| | Content of barium carbonate (g/L) | Pd content (g/L) | Pt content (g/L) | Pd content ratio A | Pt content ratio C | Content of barium carbonate (g/L) | Pd content (g/L) | Pt content (g/L) | Pd content ratio B | Pt content ratio D | Pd content (g/L) | Pt content (g/L) | Pt/Pd | |
| Example 1 | 30 | 0.75 | 1.75 | 0.30 | 0.70 | 30 | 0.50 | 2.00 | 0.20 | 0.80 | 1.25 | 3.75 | 3.00 | 220 |
| Example 2 | 30 | 0.75 | 1.75 | 0.30 | 0.70 | 30 | 0.25 | 2.25 | 0.10 | 0.90 | 1.00 | 4.00 | 4.00 | 230 |
| Example 3 | 30 | 0.75 | 1.75 | 0.30 | 0.70 | 30 | 0.13 | 2.38 | 0.05 | 0.95 | 0.88 | 4.13 | 4.71 | 227 |
| Example 4 | 30 | 0.75 | 1.75 | 0.30 | 0.70 | 30 | 0.00 | 2.50 | 0.00 | 1.00 | 0.75 | 4.25 | 5.67 | 221 |
| Comparative Example 1 | 30 | 0.75 | 1.75 | 0.30 | 0.70 | 30 | 0.75 | 1.75 | 0.30 | 0.70 | 1.50 | 3.50 | 2.33 | 210 |
| Comparative Example 2 | 30 | 1.25 | 1.25 | 0.50 | 0.50 | 30 | 0.75 | 1.75 | 0.30 | 0.70 | 2.00 | 3.00 | 1.50 | 205 |
| Comparative Example 3 | 30 | 1.75 | 0.75 | 0.70 | 0.30 | 30 | 0.75 | 1.75 | 0.30 | 0.70 | 2.50 | 2.50 | 1.00 | 85 |
| Comparative Example 4 | 30 | 2.25 | 0.25 | 0.90 | 0.10 | 30 | 0.75 | 1.75 | 0.30 | 0.70 | 3.00 | 2.00 | 0.67 | 30 |
| Comparative Example 5 | 30 | 0.75 | 1.75 | 0.30 | 0.70 | 30 | 1.25 | 1.25 | 0.50 | 0.50 | 2.00 | 3.00 | 1.50 | 120 |
| Comparative Example 6 | 30 | 0.75 | 1.75 | 0.30 | 0.70 | 30 | 1.75 | 0.75 | 0.70 | 0.30 | 2.50 | 2.50 | 1.00 | 58 |
| Comparative Example 7 | 30 | 0.75 | 1.75 | 0.30 | 0.70 | 30 | 2.25 | 0.25 | 0.90 | 0.10 | 3.00 | 2.00 | 0.67 | 10 |
| Comparative Example 8 | 30 | 0.25 | 2.25 | 0.10 | 0.90 | 30 | 0.75 | 1.75 | 0.30 | 0.70 | 1.00 | 4.00 | 4.00 | 210 |
| Comparative Example 9 | 30 | 0.13 | 2.38 | 0.05 | 0.95 | 30 | 0.75 | 1.75 | 0.30 | 0.70 | 0.88 | 4.13 | 4.71 | 207 |
| Comparative Example 10 | 30 | 0.00 | 2.50 | 0.00 | 1.00 | 30 | 0.75 | 1.75 | 0.30 | 0.70 | 0.75 | 4.25 | 5.67 | 205 |

Table 1 indicates that in Example 1 to Example 4 in which the Pd content ratio A is less than 0.5 and the Pd content ratio A is higher than the Pd content ratio B, the NOx storing amount is more than 220 mg/L and the excellent NOx storing performane is exhibited.

Although the embodiments of the present invention have been described above, each of the above-described embodiments is merely one example. The present invention can be carried out in other various modes. The present invention can be carried out based on the contents disclosed in this specification and technical common sense in the field. The techniques described in the scope of claims include those in which the embodiments exemplified above are variously modified and changed. For example, another modification can replace a part of the aforementioned embodiment or be added to the aforementioned embodiment. Additionally, the technical feature may be deleted as appropriate unless such a feature is described as an essential element.

### Reference Signs List

1 Exhaust gas purifying catalyst
2 Internal-combustion engine
3 Exhaust path
4 Exhaust manifold
5 Exhaust pipe
6 First catalyst
7 Second catalyst
8 ECU
9 Sensor
10 Base material
10a Upstream side end part
10b Downstream side end part
12 Cell
14 Partition wall
20 Catalyst layer
21 First layer
22 Second layer
22a Second layer upstream side part
22b Second layer downstream side part
23 Third layer
100 Exhaust gas purifying system

## Claims

1. An exhaust gas purifying catalyst that purifies exhaust gas emitted from an internal-combustion engine, comprising:
a base material; and
a catalyst layer disposed on the base material, wherein
the catalyst layer includes a first layer disposed on the base material and containing at least Pd as a catalyst metal, a second layer disposed on the first layer and containing a catalyst metal and a NOx storing material, and a third layer disposed on the second layer and containing at least Rh as a catalyst metal,
the second layer includes an upstream side part disposed from an upstream side end part of the base material to a downstream side in a flowing direction of the exhaust gas and containing at least Pt and Pd as the catalyst metal, and a downstream side part disposed from a downstream side end part of the base material to an upstream side in the flowing direction of the exhaust gas and containing at least Pt as the catalyst metal, and
when a ratio of a Pd content to a content of the catalyst metal in the upstream side part is a Pd content ratio A and a ratio of the Pd content to the content of the catalyst metal in the downstream side part is a Pd content ratio B, the Pd content ratio A is less than 0.5 and the Pd content ratio A is higher than the Pd content ratio B.

2. The exhaust gas purifying catalyst according to claim 1, wherein a ratio of a Pt content in the second layer to the Pd content in the second layer is 3 or more.

3. The exhaust gas purifying catalyst according to claim 1, wherein the downstream side end part contains Pd as the catalyst metal and the Pd content ratio B is less than 0.3.

4. The exhaust gas purifying catalyst according to claim 1, wherein when a ratio of a Pt content to the content of the catalyst metal in the upstream side part is a Pt content ratio C, the Pt content ratio C is 0.7 or more.

5. The exhaust gas purifying catalyst according to claim 1, wherein when a ratio of a Pt content to the content of the catalyst metal in the downstream side part is a Pt content ratio D, the Pt content ratio D is 0.8 or more.

6. The exhaust gas purifying catalyst according to claim 1, wherein a ratio (A/B) of the Pd content ratio A to the Pd content ratio B is 2 or more.

7. The exhaust gas purifying catalyst according to claim 1, wherein a coating amount (g/L) of the downstream side part to a coating amount (g/L) of the upstream side part is 0.9 or more and 1.1 or less.

8. The exhaust gas purifying catalyst according to claim 1, wherein the NOx storing material contains an alkaline-earth metal.

9. The exhaust gas purifying catalyst according to claim 8, wherein the NOx storing material contains barium.

10. The exhaust gas purifying catalyst according to claim 1, wherein the third layer contains Rh and Pd as the catalyst metal.

11. The exhaust gas purifying catalyst according to claim 1, wherein a total Pt content in the second layer is 3.5 g/L or more and 5 g/L or less.

12. The exhaust gas purifying catalyst according to claim 1, wherein a total Pd content in the second layer is 0.5 g/L or more and 1.25 g/L or less.

13. The exhaust gas purifying catalyst according to claim 1, wherein when a length of the base material in a cylinder axis direction is 100%, a length of the upstream side part in the cylinder axis direction is 30% or more and 70% or less.

14. The exhaust gas purifying catalyst according to claim 1, wherein when a length of the base material in a cylinder axis direction is 100%, a length of the downstream side part in the cylinder axis direction is 30% or more and 70% or less.
